# FASCICULE DE BREVET EUROPEEN

(11) **EP 2 753 971 B1**
(45) Date de publication et mention de la délivrance du brevet: **01.07.2015**
(21) Numéro de dépôt: 13731363.1
(22) Date de dépôt: 27.05.2013
(51) Int. Cl.: G02B 27/64, H04N 5/232

(54) **STABILISATION D'UNE LIGNE DE VISÉE D'UN SYSTÈME D'IMAGERIE EMBARQUÉ À BORD D'UN SATELLITE**
SICHTLINIENSTABILISIERUNG EINES SATELLITEN-GESTÜTZTEN ABBILDUNGSSYSTEMS
STABILIZATION OF A LINE OF SIGHT OF AN IMAGING SYSTEM EMBEDDED ONBOARD A SATELLITE

(30) Priorité: 06.06.2012 FR 1201632
(43) Date de publication de la demande: 16.07.2014
(73) Titulaire: Airbus Defence and Space SAS, 78130 Les Mureaux (FR)
(72) Inventeur: GEORGY, Pierre-Luc, F-31500 Toulouse (FR)
(74) Mandataire: Cabinet Plasseraud
(86) Numéro de dépôt international: PCT/FR2013/051176
(87) Numéro de publication internationale: WO 2013/182779

(56) Documents cités:
- WO-A1-90/00334
- US-A1- 2007 103 556
- US-A1- 2008 186 386
- US-A1- 2009 021 588

## Description

La présente invention concerne un procédé de stabilisation d'une ligne de visée d'un système d'imagerie qui est embarqué à bord d'un satellite. Elle concerne aussi un système d'imagerie qui est adapté pour permettre une telle stabilisation.

In est connu d'utiliser des images qui sont saisies successivement à partir d'un satellite pour détecter des variations d'une ligne de visée d'imagerie, puis de corriger cette ligne de visée pour en compenser les variations.

Lorsque la ligne de visée est fixe par rapport au satellite, des modifications de l'orientation du satellite entier qui sont effectuées pour compenser les variations de la ligne de visée permettent de stabiliser l'attitude du satellite, c'est-à-dire son orientation angulaire par rapport à des repères externes. En particulier, ces repères peuvent être imagés dans les images qui sont saisies.

Une autre application de la stabilisation de la ligne de visée d'un système d'imagerie qui est embarqué à bord d'un satellite consiste à réduire un flou des images qui sont saisies. Ce flou est causé par les variations involontaires de la ligne de visée qui interviennent pendant la durée d'exposition des photodétecteurs du capteur d'image. Ces variations involontaires peuvent être provoquées par des vibrations qui sont produites par des éléments mobiles du satellite, telles que des actionneurs de contrôle d'attitude, ou une roue à filtres, ou même du carburant en phase liquide.

Le document US 2009/021588 publié le 22.01.2009, concerne le mouvement d'un appareil d'imagerie qui se produit au cours de l'exposition d'une image. En particulier, il concerne les modes de réalisation des procédés de traitement de signaux numériques obtenus par un capteur d'image pour déterminer et corriger le mouvement de l'appareil.

De façon générale, la stabilisation de la ligne de visée du système d'imagerie est d'autant plus efficace que le temps de latence est court, entre la survenance d'une nouvelle variation de la ligne de visée d'une part, et l'instant auquel est obtenu le résultat de la caractérisation de cette variation d'autre part. Lorsque ce temps de latence est court, il est possible de commander efficacement le système de contrôle d'attitude du satellite, ou un support mobile du système d'imagerie, ou encore un système de pointage variable, de façon à compenser au moins en partie la variation de la ligne de visée qui a été détectée et caractérisée. Autrement dit, il est alors possible de stabiliser efficacement la ligne de visée, avec une grande réactivité par rapport à ses variations involontaires.

Un autre but général des procédés de stabilisation de la ligne de visée consiste à produire des caractérisations successives de la direction de cette ligne de visée selon une fréquence de caractérisation qui soit suffisamment élevée.

Un autre but encore des procédés de stabilisation de la ligne de visée d'un système d'imagerie qui est embarqué à bord d'un satellite consiste à permettre une telle stabilisation avec une précision qui soit élevée. En particulier, il est nécessaire de caractériser les variations de la ligne de visée avec une précision supérieure à celle qui peut être obtenue en utilisant des gyroscopes ou des détecteurs stellaires.

Enfin, un autre but encore de l'invention consiste en l'obtention d'une telle stabilisation améliorée de la ligne de visée, qui ne nécessite pas d'embarquer à bord du satellite des équipements supplémentaires qui soient lourds, encombrants ou coûteux. Autrement dit, l'invention vise à améliorer la stabilisation de la ligne de visée en modifiant le moins possible les équipements qui sont déjà présents à bord du satellite.

Pour atteindre ces buts et d'autres, l'invention propose un nouveau procédé de stabilisation d'une ligne de visée d'un système d'imagerie qui est embarqué à bord d'un satellite, lorsque ce système d'imagerie comprend :
- un télescope, qui est agencé pour former une image d'une scène dans un plan focal, suivant la ligne de visée du système d'imagerie ; et
- au moins un capteur d'image matriciel qui est disposé dans le plan focal, et adapté pour saisir des images successives selon un mode séquentiel dans lequel des photodétecteurs du capteur sont commandés successivement et individuellement pour une phase d'accumulation de signal de détection d'un rayonnement reçu suivie par une phase de lecture d'un signal accumulé, selon un ordre de balayage des photodétecteurs qui est répété continûment en boucle, chaque répétition du balayage des photodétecteurs correspondant à une nouvelle image saisie, et la phase de lecture pour l'un quelconque des photodétecteurs étant effectuée en même temps que la phase d'accumulation pour d'autres des photodétecteurs.

Autrement dit, le capteur d'image qui est utilisé pour le procédé de l'invention est adapté pour saisir les images en mode dit «rolling shutter» en anglais, par opposition au mode dit global, ou «snapshot», pour lequel la phase d'accumulation du signal de détection est synchrone pour tous les photodétecteurs, pour saisir une même image.

Dans le procédé de l'invention, pour plusieurs fenêtres qui sont formées chacune d'un sous-ensemble différent de photodétecteurs adjacents à l'intérieur du capteur, et chaque fenêtre étant plus petite qu'une surface utile totale du capteur, une portion d'image qui est saisie dans l'une des fenêtres lors d'une des répétitions du balayage des photodétecteurs est comparée avec un contenu d'image de référence pour la même fenêtre. Ainsi, une variation de la ligne de visée peut être caractérisée, entre la répétition du balayage des photodétecteurs et un balayage de référence, et une nouvelle caractérisation de la variation de la ligne de visée est obtenue séparément pour chaque fenêtre à chaque répétition du balayage des photodétecteurs. Une orientation d'une partie au moins du système d'imagerie est alors changée de façon à modifier la ligne de visée, pour compenser au moins partiellement la variation de la ligne de visée qui a été caractérisée.

Ainsi, le procédé de stabilisation de l'invention utilise le capteur d'image qui fonctionne en mode «rolling shutter», si bien que ce capteur n'est pas ajouté spécialement pour stabiliser la ligne de visée lorsqu'il est déjà prévu pour une fonction d'imagerie, notamment une fonction d'imagerie à haute résolution.

Grâce à l'utilisation de fenêtres dans le capteur pour acquérir des portions d'image qui sont réduites, la durée totale de lecture de chaque fenêtre est inférieure à la durée de saisie d'une image complète avec tous les photodétecteurs du capteur. Elle peut être très inférieure à cette dernière lorsque la fenêtre est beaucoup plus petite que la surface totale du capteur qui est utilisée pour la fonction d'imagerie. La portion d'image qui est saisie dans chaque fenêtre à chaque balayage du mode «rolling shutter» est comparée à celle qui a été saisie lors d'un balayage antérieur, mais l'utilisation de plusieurs fenêtres différentes permet d'obtenir des comparaisons de portions d'image à la fréquence du balayage du mode «rolling shutter» multipliée par le nombre de fenêtres. Ainsi, la fréquence de caractérisation des variations de la ligne de visée est supérieure, et peut être même très supérieure, à celle de la saisie d'images complètes par le capteur.

En outre, grâce à la taille réduite des fenêtres, celles-ci peuvent être lues avec une durée totale de lecture qui soit courte pour chaque fenêtre. Tel est le cas, notamment, lorsque les photodétecteurs d'une même fenêtre sont lus consécutivement, c'est-à-dire les uns à la suite des autres. Les portions d'image correspondantes constituent aussi des quantités de données qui sont réduites, pour lesquelles les opérations de comparaison et de corrélation de contenus d'images peuvent être réalisées rapidement. Autrement dit, le temps de latence entre la survenance d'une nouvelle variation de la ligne de visée et l'obtention du résultat de sa caractérisation peut être court ou très court. Ainsi, il est possible de réaliser une stabilisation très réactive de la ligne de visée.

De plus, les variations de la ligne de visée sont caractérisées en utilisant le même capteur d'image que celui de la fonction d'imagerie, qui peut posséder une résolution très fine. De cette façon, les variations de la ligne de visée sont caractérisées avec une sensibilité et une précision qui sont élevées.

Un avantage du procédé de l'invention résulte en outre du fait que la caractérisation des variations de la ligne de visée peut être effectuée pendant que des images complètes sont saisies avec le capteur, sans interruption ni perturbation de cette fonction d'imagerie.

Enfin, le procédé de l'invention ne nécessite pas de composants supplémentaires, ni d'adaptations qui soient conséquentes, par rapport aux composants déjà prévus pour la fonction d'imagerie.

Dans divers modes de mise en oeuvre de l'invention, les perfectionnements suivants peuvent être utilisés, séparément ou en combinaison de plusieurs d'entre eux :
- le même contenu d'image de référence peut être repris pour plusieurs caractérisations successives de la variation de la ligne de visée qui sont obtenues à partir d'une même des fenêtres, de sorte qu'une même direction de référence soit utilisée pour ces caractérisations ;
- alternativement, pour chaque nouvelle caractérisation de la variation de la ligne de visée, le contenu d'image de référence qui est utilisé pour chaque fenêtre peut être la portion d'image qui a été saisie dans la même fenêtre lors de la répétition du balayage des photodétecteurs correspondant à la caractérisation de la variation de la ligne de visée juste antérieure à la nouvelle caractérisation. Autrement dit, une direction de la ligne de visée qui résulte de la caractérisation antérieure constitue une direction de référence pour la nouvelle caractérisation ;
- les fenêtres pour lesquelles les portions d'images sont comparées entre deux répétitions du balayage des photodétecteurs, peuvent être disjointes à l'intérieur du capteur ;
- les fenêtres pour lesquelles les portions d'images sont comparées entre deux répétitions du balayage des photodétecteurs, peuvent correspondre à des positions différentes d'un même gabarit à l'intérieur du capteur. Les fenêtres sont alors déterminées par des translations successives du gabarit à l'intérieur du capteur au fur et à mesure du balayage des photodétecteurs pour chaque image qui est saisie ;
- un résultat de chaque caractérisation de la variation de la ligne de visée peut être pondéré, sélectionné ou rejeté en fonction d'un contenu ou d'un niveau de qualité de la portion d'image qui est saisie et comparée avec le contenu d'image de référence pour cette caractérisation ;
- plusieurs résultats de caractérisations de la variation de la ligne de visée qui ont été obtenus successivement pour des fenêtres différentes ou pour des répétitions différentes du balayage des photodétecteurs, peuvent ensuite être filtrés par rapport à une vitesse de variation de ces résultats ;
- une variation moyenne de la ligne de visée peut être calculée à partir de plusieurs résultats de caractérisations de la variation de la ligne de visée qui ont été obtenus pour des fenêtres différentes ou pour des répétitions différentes du balayage des photodétecteurs ;
- une erreur systématique qui peut être présente dans les résultats des caractérisations successives de la variation de la ligne de visée peut être supprimée, par exemple en utilisant une décomposition en série de Fourier. Pour cela, le procédé de l'invention peut comprendre en outre les étapes suivantes :
   calculer la décomposition en série de Fourier pour les résultats des caractérisations successives de la variation de la ligne de visée, sous la forme d'une somme de composantes à variations périodiques qui sont associées respectivement à des valeurs d'une fréquence de variation de la ligne de visée ;
   appliquer une correction à certaines amplitudes de ces composantes à variations périodiques, de façon à réduire des variations de ces amplitudes dans des intervalles qui sont limités autour de multiples de la fréquence du balayage des photodétecteurs ; puis
   calculer une recomposition de série Fourier à partir des composantes à variations périodiques, en utilisant les amplitudes qui ont été corrigées à l'intérieur des intervalles limités autour des multiples de la fréquence du balayage des photodétecteurs, cette recomposition de série de Fourier fournissant des résultats corrigés pour les caractérisations successives de la variation de la ligne de visée ;
- le balayage répété des photodétecteurs pour saisir les images successives peut être effectué d'abord à une première fréquence pendant une première durée, puis à une seconde fréquence qui est différente de la première fréquence pendant une seconde durée, les première et seconde fréquences étant sélectionnées de sorte que des repliements de spectre qui affectent les résultats obtenus pendant chaque durée pour la variation de la ligne de visée, soient différents. Dans ce cas, le balayage des photodétecteurs pendant l'une des première et seconde durées peut être plus lent que pendant l'autre de ces durées, en utilisant un même nombre de photodétecteurs pour le mode séquentiel qui est mis en oeuvre pendant chacune des durées. Alternativement, le balayage qui est effectué à la fréquence la plus élevée peut être restreint à un premier nombre des photodétecteurs du capteur d'image, plus petit qu'un second nombre des photodétecteurs du capteur d'image qui sont utilisés pour le balayage effectué à la fréquence la plus faible ; et
- plusieurs capteurs d'images matriciels peuvent être disposés dans le plan focal pour saisir simultanément des images respectives selon le mode séquentiel qui est alors mis en oeuvre séparément pour chaque capteur d'image. Dans ce cas, le balayage des photodétecteurs pour le mode séquentiel peut avantageusement être répété à une première fréquence pour un premier de ces capteurs d'images et à une seconde fréquence pour un second de ceux-ci, avec les première et seconde fréquences qui sont différentes et sélectionnées de sorte que des multiples de la première fréquence ne coïncident pas avec des multiples de la seconde fréquence.

Selon un mode préféré de mise en oeuvre de l'invention, plusieurs canaux de lecture des photodétecteurs du capteur d'image peuvent être prévus pour fonctionner simultanément et en parallèle. De cette façon, la fréquence de caractérisation de la variation de la ligne de visée peut encore être augmentée. Pour cela, le capteur d'image peut comprendre au moins deux circuits séparés de contrôle et de lecture qui sont dédiés respectivement à des parties complémentaires du capteur formées chacune d'un sous-ensemble de photodétecteurs adjacents, de sorte que des parties d'image sont saisies respectivement par les parties du capteur selon le mode séquentiel qui est mis en oeuvre séparément et simultanément à l'intérieur de celles-ci. Au moins une des fenêtres est définie à l'intérieur de chaque partie du capteur, et les portions d'images qui sont saisies dans chaque fenêtre à l'intérieur de chaque partie du capteur sont comparées entre deux répétitions différentes du balayage des photodétecteurs de cette partie du capteur.

La fréquence de caractérisation de la variation de la ligne de visée peut aussi être augmentée en utilisant plusieurs capteurs d'images en parallèle. Pour cela, des capteurs d'images séparés peuvent être disposés dans le plan focal, de façon à saisir simultanément des images respectives selon le mode séquentiel mis en oeuvre séparément pour chaque capteur. Des portions d'images qui sont saisies dans des fenêtres à l'intérieur de chaque capteur, sont alors comparées entre deux répétitions différentes du balayage des photodétecteurs de ce capteur, simultanément pour tous les capteurs.

Pour des premières applications de l'invention dont la réduction du flou de bouger d'image, l'orientation d'une partie au moins du système d'imagerie peut être changée en variant une orientation d'un support mobile du système d'imagerie par rapport à une structure principale du satellite. Alternativement, une orientation d'un dispositif de pointage variable qui est agencé pour ajuster la ligne de visée par rapport au capteur d'image, peut être variée de façon équivalente.

Pour des secondes applications de l'invention dont la stabilisation de l'attitude du satellite, l'orientation du système d'imagerie peut être changée en variant l'attitude du satellite et en gardant fixe la ligne de visée par rapport au satellite.

L'invention propose aussi un système d'imagerie qui est destiné à être embarqué à bord d'un satellite, et qui est adapté pour stabiliser une ligne de visée de ce système d'imagerie, en comprenant :
- un télescope, qui est agencé pour former une image d'une scène dans un plan focal, suivant la ligne de visée du système d'imagerie ;
- au moins un capteur d'image matriciel, qui est disposé dans le plan focal, et adapté pour saisir des images successives selon le mode séquentiel ; et
- une unité de comparaison d'images, qui est adaptée pour sélectionner plusieurs fenêtres formées chacune d'un sous-ensemble différent de photodétecteurs adjacents à l'intérieur du capteur, chaque fenêtre étant plus petite qu'une surface utile totale du capteur, et adaptée pour comparer une portion d'image qui est saisie dans l'une des fenêtres lors d'une des répétitions du balayage des photodétecteurs avec un contenu d'image de référence pour la même fenêtre, de façon à caractériser une variation de la ligne de visée entre la répétition du balayage des photodétecteurs et un balayage de référence, avec une nouvelle caractérisation de la variation de la ligne de visée qui est obtenue séparément pour chaque fenêtre à chaque répétition du balayage des photodétecteurs ; et
- une unité de commande, qui est adaptée pour contrôler un changement d'une orientation d'une partie au moins du système d'imagerie, de façon à modifier la ligne de visée pour compenser au moins partiellement sa variation.

Un tel système est adapté pour mettre en oeuvre un procédé de stabilisation tel que décrit précédemment.

En fonction de l'application de l'invention, l'unité de commande peut être agencée pour contrôler un changement d'orientation, un déplacement ou un fonctionnement d'au moins un équipement mobile pour compenser au moins partiellement la variation de la ligne de visée. Cet équipement peut être un support mobile du système d'imagerie qui est adapté pour varier l'orientation de ce dernier, un dispositif de pointage variable du système d'imagerie qui est agencé pour modifier la ligne de visée par rapport au capteur d'image, ou encore un système de contrôle d'attitude et d'orbite du satellite. Eventuellement, plusieurs de ces équipements mobiles peuvent être contrôlés d'une façon combinée par l'unité de commande.

D'autres particularités et avantages de la présente invention apparaîtront dans la description ci-après d'exemples de mise en oeuvre non limitatifs, en référence aux dessins annexés, dans lesquels :
- la figure 1 représente schématiquement un satellite qui est équipé d'un télescope d'observation, auquel l'invention peut être appliquée ;
- les figures 2a et 2b représentent respectivement deux capteurs d'images fonctionnant en mode séquentiel, qui peuvent être utilisés pour mettre en oeuvre l'invention ;
- la figure 3a est un diagramme temporel qui illustre une séquence d'un procédé conforme à l'invention, pour caractériser des variations d'une ligne de visée ;
- la figure 3b correspond à la figure 3a pour une variante du mode de caractérisation des variations de la ligne de visée ; et
- les figures 4a à 4e illustrent un perfectionnement de l'invention, pour supprimer une erreur systématique de caractérisation de la ligne de visée.

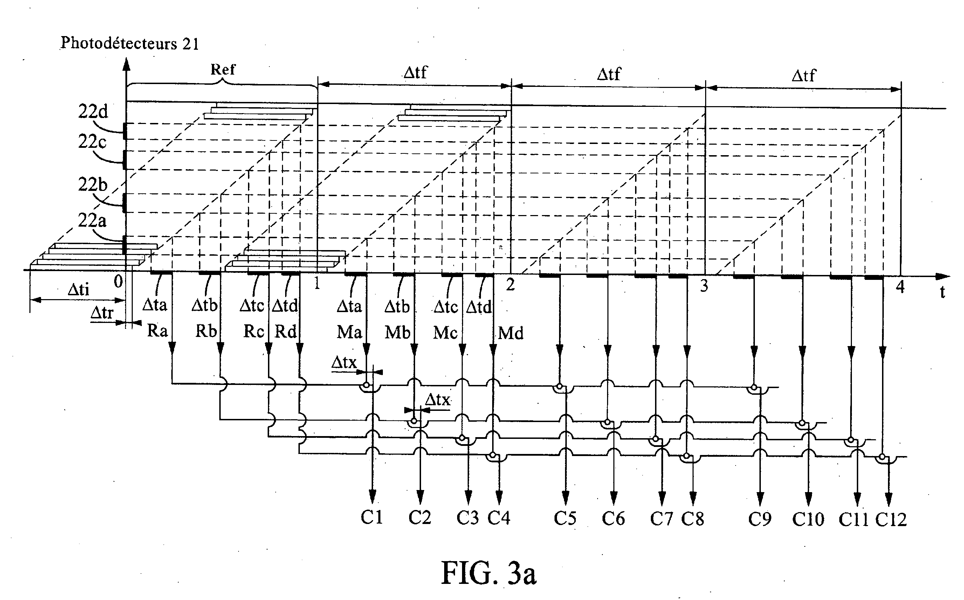

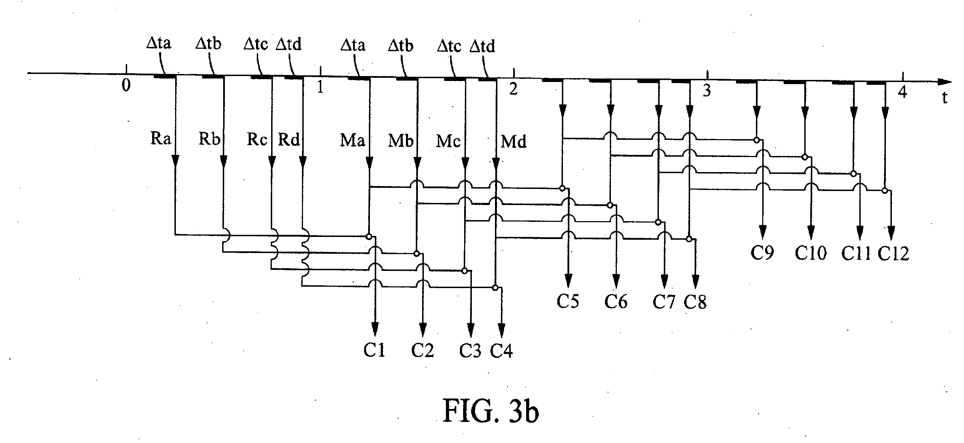

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques. Sur les figures 3a et 3b, les petits cercles évidés symbolisent des opérations de corrélation ou de comparaison de contenus d'images, qui produisent les résultats des caractérisations de variation de ligne de visée.

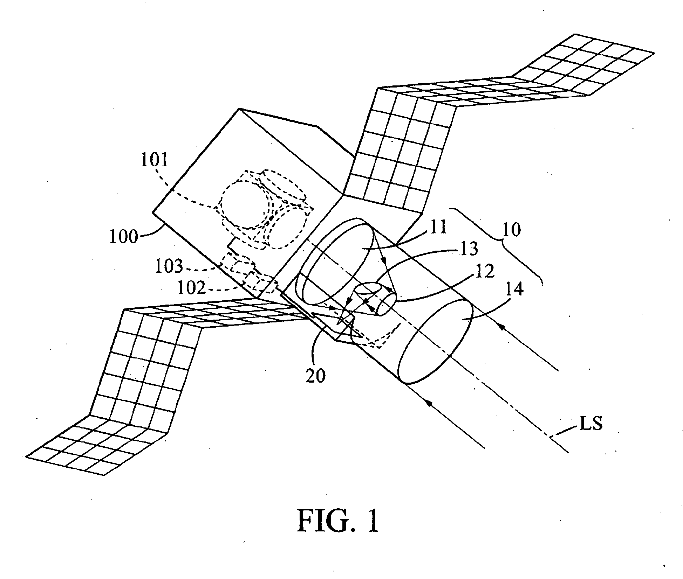

La figure 1 représente symboliquement un satellite 100, qui peut être un satellite géostationnaire ou un satellite à orbite basse autour de la Terre. Il est équipé d'un télescope 10, dont la ligne de visée est notée LS pour «line of sight» en anglais. A titre d'illustration, le télescope 10 peut avoir une structure à deux miroirs : un miroir primaire 11 et un miroir secondaire 12. Les références 13 et 14 désignent respectivement un miroir de renvoi et l'entrée optique du télescope 10. Le télescope 10 forme l'image d'une portion de surface de la Terre dans un plan focal, à l'intérieur duquel est disposé un capteur d'image 20. Le capteur d'image 20 est fixe par rapport au télescope 10.

L'objet de l'invention consiste à stabiliser efficacement la ligne de visée LS, pour supprimer ou réduire des variations involontaires de cette ligne de visée. De telles variations peuvent être provoquées par des vibrations du satellite 100 lui-même, causées par exemple par l'atmosphère terrestre résiduelle à l'altitude du satellite 100, ou par des éléments mobiles qui sont présents à son bord.

Lorsqu'il s'agit de stabiliser la ligne de visée LS dans un but d'imagerie par exemple, il peut être approprié de modifier l'orientation du télescope 10 par rapport à la structure principale du satellite 100, si le télescope est monté sur la structure par l'intermédiaire d'un support mobile orientable (non représenté). Alternativement, au moins un système de pointage variable du télescope, qui peut être un système de pointage fin, un système de pointage grossier ou une combinaison des deux, peut être utilisé pour ajuster la ligne de visée LS par rapport au capteur d'image 20. L'architecture et le fonctionnement de tels systèmes de pointage sont connus de l'Homme du métier, si bien qu'il n'est pas nécessaire de les répéter ici.

Enfin, le télescope 10 peut être fixé rigidement sur le satellite 100, et la ligne de visée LS est dirigée vers une zone d'observation à la surface de la Terre en ajustant directement l'attitude du satellite lui-même. Dans ce cas, la stabilisation de la ligne de visée LS est obtenue en contrôlant directement un fonctionnement du système de contrôle d'orbite et d'attitude du satellite 100, connu sous l'acronyme SCOA. La référence 101 désigne une représentation symbolique de ce système SCAO.

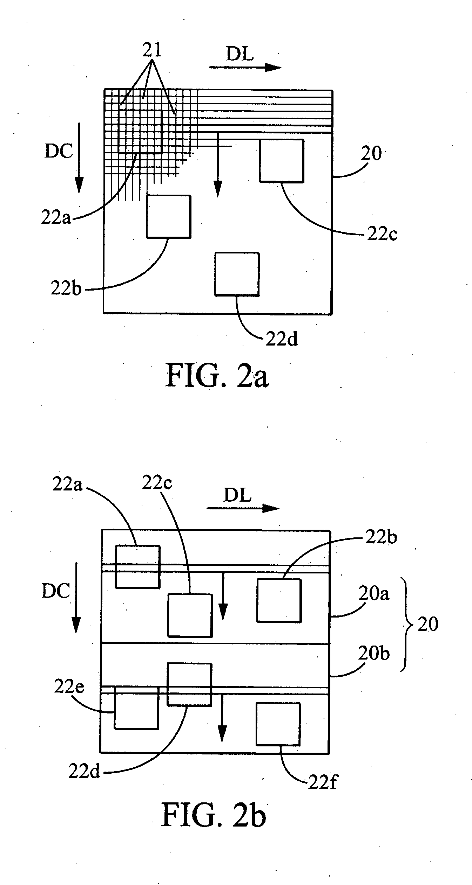

En référence à la figure 2a, le capteur d'image 20 comprend une matrice de photodétecteurs 21 qui sont disposés en lignes et en colonnes. Par exemple, ce capteur d'image peut comprendre deux mille photodétecteurs 21 selon ses deux directions de lignes et de colonnes, qui sont notées respectivement DL et DC. Le capteur 20 est adapté pour saisir des images de façon continue en mode séquentiel, ou «rolling mode». Selon ce mode particulier de saisie d'images, tous les photodétecteurs 21 ou une sélection d'entre eux sont lus tour à tour selon un ordre de balayage fixé des photodétecteurs, et chaque nouvelle exécution du balayage correspond à une nouvelle image qui est saisie. Chaque lecture de l'un des photodétecteurs 21 est consécutive à une durée d'exposition du photodétecteur, lors de laquelle un signal électrique est accumulé proportionnellement à une intensité lumineuse qui est reçue par ce photodétecteur pendant la durée d'exposition. Un tel fonctionnement peut être mis en oeuvre pour une mission d'imagerie, notamment pour une mission d'observation à haute définition. Par exemple, la fréquence d'acquisition des images, qui est égale à la fréquence de répétition du balayage des photodétecteurs 21, peut être de l'ordre de 0,1 Hz (hertz). Lorsque le balayage parcourt tous les photodétecteurs 21 du capteur 20, les images qui sont saisies sont dites dans la suite images en pleine trame («full frame images» en anglais), ou mode de saisie d'image en pleine trame («full frame image capture mode»).

La référence 102 sur la figure 1 désigne une unité de traitement des images qui sont saisies. Elle est reliée en entrée à une sortie de données du capteur d'image 20, et en sortie à une unité de commande 103, qui est adaptée pour contrôler le fonctionnement de l'équipement mobile utilisé pour modifier la direction de la ligne de visée LS.

De façon connue, l'ordre de balayage des photodétecteurs 21 peut être quelconque par rapport à l'emplacement de chaque photodétecteur dans la matrice 20. La présente invention est compatible avec n'importe quel ordre de balayage, mais pour raison de simplicité d'illustration, les figures 2a et 2b représentent un (des) balayage(s) qui est (sont) effectué(s) progressivement dans la matrice 20 en suivant chaque ligne selon la direction DL, puis en passant à la ligne suivante selon la direction DC. Après avoir fini de lire le dernier photodétecteur 21 de la dernière ligne, le balayage est recommencé sans interruption au premier détecteur de la première ligne, de façon cyclique.

Pour mettre en oeuvre l'invention, on définit plusieurs fenêtres dans la matrice 20, qui sont formées chacune de photodétecteurs 21 adjacents. De préférence, les photodétecteurs 21 d'une même fenêtre peuvent être lus consécutivement les uns à la suite des autres au cours du balayage du mode séquentiel, afin de réduire au maximum la durée totale de lecture de la fenêtre. En outre, une distorsion d'image à l'intérieur de chaque fenêtre, qui est due au mode séquentiel de saisie d'image, peut aussi être minimisée par une telle lecture consécutive. Le même ensemble de fenêtres est repris à chaque répétition du balayage.

La définition ou le calcul des fenêtres peut être effectué par l'unité de traitement 102, ainsi que des opérations de comparaison ou de corrélation entre des contenus d'image qui sont saisis lors d'exécutions différentes du balayage du mode séquentiel.

Les fenêtres qui sont utilisées peuvent être définies de plusieurs façons. Par exemple, ce peut être des fenêtres fixes qui sont repérées par les coordonnées des photodétecteurs 21 dans la matrice du capteur 20. Dans ce cas, elles peuvent être disjointes et réparties régulièrement dans toute la surface utile du capteur 20. Alternativement, chaque fenêtre peut résulter d'un gabarit de fenêtre, aux dimensions fixes mais qui est décalé dans la matrice du capteur 20 au fur et à mesure du balayage. Un tel mode de définition des fenêtres peut être avantageux lorsque l'ordre de parcours des photodétecteurs 21 dans le balayage du mode séquentiel de saisie des images est fixé par ailleurs. Chaque fenêtre peut être rectangulaire ou carrée à l'intérieur de la matrice, et comporte un nombre de photodétecteurs 21 inférieur, ou très inférieur, au nombre total des photodétecteurs du capteur d'image 20. Par exemple, chaque fenêtre peut comporter 100 x 100 photodétecteurs, si bien que la durée totale de lecture d'une fenêtre peut être 400 fois plus courte que celle de la matrice entière. Sur la figure 2a, quatre fenêtres ont été fixées, qui sont référencées 22a à 22d.

Lors de la saisie d'une première image en pleine trame selon le mode séquentiel, le contenu d'image à l'intérieur de chaque fenêtre est mémorisé. Puis, lors de chaque saisie ultérieure d'une nouvelle image, le contenu d'image de chaque fenêtre est comparé à celui de la première image saisie pour la même fenêtre. Une telle comparaison peut être effectuée en utilisant l'une des méthodes connues de corrélation d'images. De telles méthodes peuvent mettre en oeuvre des recalages de contenus d'images les uns par rapport aux autres, pour obtenir des corrélations entre contenus d'images jusqu'à des échelles plus fines que le pas des photodétecteurs dans le capteur d'image qui est utilisé. De cette façon, une variation de la ligne de visée LS est déterminée, à partir de la variation de contenu d'image pour chaque fenêtre entre le premier balayage et chaque nouveau balayage du mode séquentiel de saisie d'image. Autrement dit, une fenêtre qui est utilisée dans la première image saisie est reprise dans l'image ultérieure, de sorte que la variation de position du contenu d'image dans cette fenêtre entre les deux exécutions du balayage permet de mesurer la variation de la ligne de visée LS. La fréquence d'obtention d'un nouveau résultat de caractérisation de la variation de la ligne de visée LS est donc égale à la fréquence de répétition du balayage du mode séquentiel, multipliée par le nombre de fenêtres qui sont utilisées.

La figure 3a illustre symboliquement une séquence complète de mise en oeuvre d'un procédé conforme à l'invention. L'axe des ordonnées repère tous les photodétecteurs 21 du capteur 20, en indiquant les fenêtres 22a-22d. L'axe des abscisses repère le temps qui est noté t, et chaque valeur entière qui est indiquée sur cet axe correspond à un balayage supplémentaire de l'ensemble des photodétecteurs 21 selon le mode séquentiel de saisie d'image. Ainsi, les balayages correspondant à quatre images en pleine trame qui sont saisies successivement sont représentés, et Δtf est la durée de chaque balayage de pleine trame. Pour chacun des photodétecteurs 21, la durée de la phase d'accumulation est Δti, et la durée de la phase de lecture Δtr. Lorsque tous les photodétecteurs 21 de chaque fenêtre sont lus successivement, les durées respectives de lecture des fenêtres 22a-22d sont respectivement Δta,..., Δtd, avec Δta=Na x Δtr où Na est le nombre des photodétecteurs 21 qui sont à l'intérieur de la fenêtre 22a, et de même pour les autres fenêtres 22b-22d. Pour le premier balayage de la matrice du capteur 20, un contenu d'image de référence noté Ra est donc obtenu pour la fenêtre 22a à la fin de la durée Δta. De même, lors de ce même premier balayage, un contenu d'image de référence noté Rb est obtenu pour la fenêtre 22b à la fin de la durée Δtb, et encore de même pour les fenêtres 22c et 22d. Pour le deuxième balayage de la matrice du capteur 20, un contenu d'image de mesure qui est noté Ma est obtenu pour la fenêtre 22a à la fin d'une nouvelle durée Δta à l'intérieur de la durée d'acquisition de la seconde image complète. De même, lors de ce même deuxième balayage, des contenus d'image de mesure Mb-Md sont aussi obtenus pour les fenêtres 22b-22d, respectivement. Lorsque le contenu d'image de mesure Ma est obtenu, il est comparé avec le contenu d'image de référence Ra pour obtenir le premier résultat C1 de caractérisation de la variation de la ligne de visée LS. Δtx est la durée de traitement qui est nécessaire pour obtenir le résultat C1 à partir des deux contenus d'images Ra et Ma. De même, des résultats C2-C4 de caractérisation de la variation de la ligne de visée LS sont aussi obtenus pour chacune des fenêtres 22b-22d pendant le deuxième balayage de la matrice du capteur 20, et la collecte des résultats successifs C5,..., C12,...est poursuivie identiquement lors des balayages ultérieurs. Pour le procédé tel qu'il est illustré dans la partie inférieure de la figure 3a, le contenu d'image Ma qui est obtenu lors de chaque balayage de la matrice du capteur 20 à partir du second de ces balayages, est comparé avec le même contenu d'image de référence Ra qui a été obtenu lors du premier balayage. De même, les contenus d'image de référence Rb-Rd sont repris de façon identique lors de chaque balayage ultérieur, pour la comparaison avec le contenu d'image de mesure Mb-Md pour la fenêtre 22b-22d correspondante. Ainsi, la direction de la ligne de visée qui correspond à chaque portion d'image de référence Ra-Rd est reprisé comme direction de référence pour les variations qui sont caractérisées ultérieurement, séparément pour chaque fenêtre 22a-22d.

A partir de la seconde image en pleine trame qui est saisie par le capteur 20, la fréquence moyenne d'obtention des résultats de caractérisation de la variation de la ligne de visée LS est la fréquence d'acquisition des images avec tous les détecteurs de la matrice. 20, multipliée par le nombre N des fenêtres utilisées, c'est-à-dire N x 1/Δtf. L'invention permet donc de caractériser la direction instantanée de la ligne de visée LS avec une fréquence d'actualisation qui peut être supérieure d'un ordre de grandeur au moins par rapport à la fréquence de saisie des images d'observation lorsque plus de dix fenêtres sont utilisées.

La durée minimale qui est nécessaire pour obtenir un nouveau résultat pour la variation de la ligne de visée LS, à partir d'une variation réelle de la direction de la ligne de visée, est Δta + Δtx pour la fenêtre 22a, et avec des expressions similaires pour les autres fenêtres 22b-22d. Cette durée pour chaque fenêtre est couramment rappelée durée de latence. Elle est très inférieure à celle qui résulterait d'une caractérisation de la variation de la ligne de visée effectuée à partir des images en pleine trame. Dans ce dernier cas, c'est-à-dire dans utiliser l'invention, la durée de latence serait en effet égale à la somme de Δtf et de la durée de traitement nécessaire pour corréler deux images en pleine trame. Typiquement, l'invention permet de réduire de plus de deux ordres de grandeur la durée de latence pour caractériser la variation de la ligne de visée.

Dans des premiers perfectionnements de l'invention, certains au moins des résultats des caractérisations de la variation de la ligne dé visée LS peuvent être pondérés, sélectionnés ou rejetés parmi la suite de tous les résultats C1, C2,... qui sont obtenus successivement. Par exemple, un résultat qui est obtenu pour une fenêtre dont le contenu d'image de mesure est faiblement contrasté peut être associé à une valeur faible d'un coefficient de fiabilité, ou bien à la valeur nulle de ce coefficient correspondant à un rejet du résultat. Tel peut être le cas lorsque le contenu d'image de la fenêtre est une zone de couverture nuageuse à la surface de la Terre ou une zone maritime. Une valeur faible du coefficient de fiabilité peut aussi être affectée à tous les résultats qui proviennent d'une même fenêtre dont le contenu d'image de référence présente un faible contraste ou une mauvaise qualité d'image lors de la première image qui est saisie.

Dans des deuxièmes perfectionnements de l'invention, la série des résultats C1, C2,... qui sont obtenus successivement pour les variations de la ligne de visée LS peut être traitée de différentes façons. Par exemple, elle peut être découpée en sous-ensembles successifs de résultats, avec chaque sous-ensemble qui contient un nombre fixé de résultats qui ont été eux-mêmes obtenus successivement. Une moyenne des résultats pour la variation de la ligne de visée LS peut alors être calculée pour chaque sous-ensemble, éventuellement en utilisant des valeurs d'un coefficient de fiabilité qui ont été déterminées conformément à l'un des premiers perfectionnements de l'invention. Lorsque le nombre de résultats élémentaires dans chaque sous-ensemble est égal au nombre de fenêtres qui sont utilisées dans la matrice du capteur 20, chaque résultat de moyenne correspond à une variation de la ligne de visée LS qui est associée à une nouvelle image en pleine trame saisie selon le mode séquentiel. Alternativement, un filtrage peut être appliqué aux résultats élémentaires C1, C2,... qui sont obtenus pour la variation de la ligne de visée LS, successivement pour toutes les fenêtres et pour les répétitions du balayage. Par exemple, un tel filtrage peut consister à moyenner un nombre fixe de résultats élémentaires, d'une façon glissante avec un décalage progressif dans la série ordonnée de tous les résultats élémentaires qui sont obtenus successivement. Un tel filtrage est de type passe-bas par rapport à la vitesse de variation des résultats C1, C2... D'autres filtrages peuvent être appliqués alternativement, avec des caractéristiques de filtres qui sont différentes.

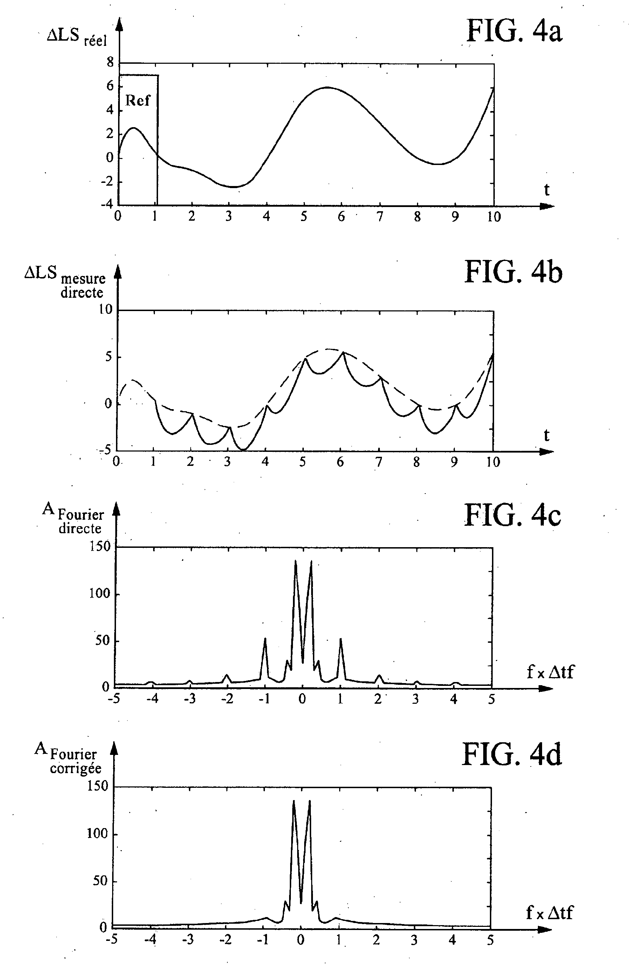

Un troisième perfectionnement de l'invention qui est maintenant décrit, permet de supprimer une erreur systématique qui pourrait intervenir dans les résultats successifs C1, C2,... qui sont obtenus pour les variations de la ligne de visée LS. Une telle erreur systématique peut provenir du fait que des directions de référence pour la ligne de visée LS, qui sont utilisées pour les caractérisations réalisées à partir de fenêtres différentes, sont elles-mêmes différentes. Cette difficulté provient du fait que des instants de référence distincts sont utilisés pour fixer la direction de référence de la ligne de visée LS pour de chaque fenêtre, et la ligne de visée LS peut avoir varié entre ces instants. Mais une erreur de ce type qui affecte la série des résultats C1, C2,... présente une période temporelle qui est égale à celle de la répétition du balayage de la matrice du capteur 20, pour le mode séquentiel de saisie des images. Il est alors possible de supprimer ou d'atténuer cette erreur de plusieurs façons, notamment en utilisant des filtrages de Wiener ou de Kalman, ou encore à partir d'une décomposition en série de Fourier de la succession des résultats élémentaires qui sont obtenus pour la variation de la ligne de visée LS. Le principe de cette dernière méthode est décrit maintenant à titre d'illustration non limitative, en référence aux figures 4a à 4e. Il consiste à supprimer les composantes de Fourier dont les fréquences temporelles sont multiples de celle de la répétition du balayage des photodétecteurs 21, ou à ramener des amplitudes de ces composantes à un niveau local moyen par lissage.

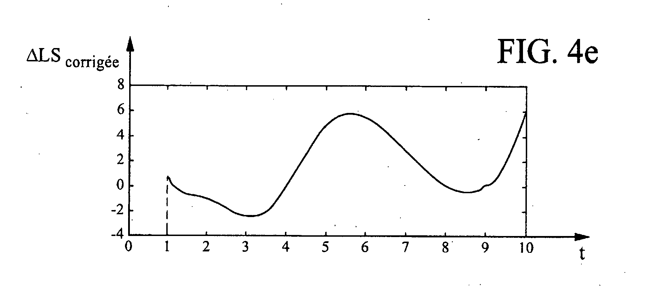

Sur les diagrammes des figures 4a, 4b et 4e, l'axe des abscisses repère le temps t comme pour la figure 3a, en indiquant le numéro de l'image en pleine trame qui a été saisie. On suppose que le nombre N des fenêtres utilisées est suffisamment élevé pour que les courbes des diagrammes 4b-4e apparaissent continues.

Le diagramme de la figure 4a représente schématiquement un exemple de variations réelles de la ligne de visée LS, qui sont notées ΔLS_{réel} en ordonnée. Ces variations sont représentées selon une seule coordonnée sur les diagrammes des figures 4a-4e pour en faciliter la visualisation, étant entendu qu'elles correspondent dans la réalité à deux coordonnées angulaires séparées.

Le cadre qui est noté Ref dans la figure 4a correspond à la saisie de la première image, pour laquelle les contenus d'image à l'intérieur des fenêtres sont repris ultérieurement comme contenus d'image de référence.

La courbe en trait continu du diagramme de la figure 4b relie les résultats C1, C2,... qui sont obtenus pour la variation de la ligne de visée LS en utilisant la séquence du procédé de la figure 3a. Ces résultats, qui sont repérés sur l'axe d'ordonnée noté ΔLS_{mesure directe}, sont déduits directement des comparaisons entre chaque contenu d'image de mesure acquis pendant un balayage ultérieur, et le contenu d'image de référence correspondant acquis pendant le balayage de saisie de la première image Ref. Le déplacement réel de la ligne de visée LS qui est survenu pendant ce premier balayage Ref apparaît donc sous forme inversée comme une erreur systématique dans tous les résultats successifs de caractérisation de la ligne de visée. Cette erreur systématique possède donc une période temporelle qui est égale à la durée Δtf du balayage de la trame complète du détecteur 20. La courbe en trait interrompu du diagramme de la figure 4b est reprise de la figure 4a, car elle constitue la base des variations de la ligne de visée qui sont calculées, sur laquelle est superposée l'erreur systématique.

Le diagramme de la figure 4c représente les amplitudes A_{Fourier directe} des composantes de la décomposition de Fourier des variations qui ont été calculées pour la ligne de visée LS, telles que représentées par la courbe en trait continu de cette figure 4b. L'axe des abscisses du diagramme est donc une fréquence temporelle, qui est exprimée en multiples de la fréquence 1/Δtf du balayage du mode séquentiel. Les composantes dont les fréquences sont situées autour de la fréquence nulle correspondent à la variation réelle de la ligne de visée LS lors des balayages successifs du mode séquentiel. Mais les composantes dont les fréquences sont multiples de 1/Δtf correspondent aux reprises répétées des variations de la ligne de visée qui sont survenues pendant le balayage de saisie de la première image Ref, à cause des reprises successives des contenus d'image de référence pour être corrélés avec les contenus d'images de mesure.

On effectue alors un lissage de la courbe des amplitudes des composantes de Fourier, comme représenté dans le diagramme de la figure 4d. Le lissage est limité à l'intérieur d'intervalles de fréquence qui s'étendent autour des multiples successifs de 1/Δtf, et les amplitudes des composantes de Fourier qui sont ainsi modifiées sont repérées sur l'axe noté A_{Fourier corrigée}. Par intervalle qui s'étend autour de chaque multiple de 1/Δtf on entend par exemple un intervalle qui s'étend jusqu'à moins de 0,2/Δtf, ou moins de 0,1/Δtf de part et d'autre du multiple de 1/Δtf.

Puis on calcule une décomposition de Fourier inverse, ou recomposition, à partir des amplitudes lissées des composantes de Fourier. Le diagramme de la figure 4e illustre le résultat de cette recomposition noté ΔLS_{corrigée} : les variations mesurées de la ligne de visée qui ont été ainsi filtrées reproduisent les variations réelles de la figure 4a, sans l'erreur due au déplacement de la ligne de visée pendant le balayage de saisie de la première image Ref.

Un quatrième perfectionnement permet de détecter des composantes de la variation réelle de la ligne de visée LS, dont les fréquences sont multiples de celle du balayage du mode séquentiel de saisie des images. En effet, par principe, ces composantes ne peuvent pas être détectées en utilisant un échantillonnage qui soit restreint par la fréquence de répétition du balayage du mode séquentiel. Pour pallier cette limitation, on change volontairement la fréquence de répétition du balayage du mode séquentiel entre deux séries d'images successives. Par exemple, la saisie d'images en mode séquentiel est poursuivie pendant une première durée d'imagerie selon la fréquence maximale qui est permise par le capteur d'image 20 avec un fonctionnement en pleine trame, correspondant à l'utilisation de tous les photodétecteurs. Puis la saisie d'images peut être effectuée pendant une seconde durée d'imagerie en augmentant la durée d'un balayage de pleine trame à une valeur qui est supérieure à Δtf. Ainsi, les fréquences pour lesquelles les variations de la ligne de visée ne peuvent être détectées, sont différentes entre les deux durées d'imagerie. Si une composante à variation périodique de la ligne de visée se prolonge au moins en partie sur les deux durées d'imagerie, elle est alors détectée nécessairement pendant l'une au moins des deux durées d'imagerie. La durée d'un balayage de pleine trame peut être augmentée par exemple en introduisant volontairement des retards dans l'enchaînement des phases d'accumulation et de lecture qui sont effectuées pour les photodétecteurs lors du balayage, sans modifier le nombre de photodétecteurs qui sont utilisés. Alternativement, la durée effective d'un balayage du mode séquentiel peut être réduite tout en maintenant un débit constant pour la lecture des photodétecteurs, mais en réduisant le nombre des photodétecteurs qui sont utilisés lors d'un balayage. Par exemple, un nombre réduit de photodétecteurs est utilisé pour les images qui sont saisies pendant la seconde durée d'imagerie, si bien que la fréquence du balayage du mode séquentiel est plus élevée pendant la seconde durée d'imagerie, que celle qui est effective pendant la première durée d'imagerie. Notamment, les photodétecteurs qui sont utilisés pendant la seconde durée d'imagerie peuvent être limités à un nombre déterminé de colonnes du capteur d'image 20, comptées progressivement à partir d'un bord de celui-ci. Les fenêtres qui sont utilisées pendant la seconde durée d'imagerie sont alors aussi situées à l'intérieur de cet ensemble de colonnes. Mathématiquement, ce quatrième perfectionnement consiste à modifier la fréquence du balayage du mode séquentiel pour que les repliements de spectre qui sont dus aux échantillonnages de mesure des variations de la ligne de visée, soient différents pour les deux durées d'imagerie.

Lorsque plusieurs capteurs d'images distincts sont utilisés dans le plan focal, par exemple pour saisir en image simultanément et respectivement des éléments de scène qui sont contenus dans des parties différentes du champ d'observation, le quatrième perfectionnement de l'invention peut aussi être mis en oeuvre en modifiant la fréquence de lecture entre certains au moins des capteurs. De cette façon, les fréquences pour lesquelles les variations de la ligne de visée ne peuvent pas être détectées, parce qu'elles coïncident avec des multiples de fréquences de répétition du balayage du mode séquentiel, diffèrent d'un capteur à l'autre. Autrement dit, l'un des capteurs d'images pallie les carences spectrales d'un autre des capteurs, pour restituer l'ensemble des valeurs de fréquence possibles pour les variations de la ligne de visée par réunion des intervalles spectraux dans lesquels chacun des capteurs est efficace. Par exemple, la fréquence de répétition du balayage du mode séquentiel peut être initialement de 5 Hz (hertz) pour tous les capteurs d'images mais, pour l'un des capteurs, une pause de 50 ms (milliseconde) peut être introduite après chaque balayage complet de ses photodétecteurs. Pour ce capteur, la fréquence apparente de répétition du balayage du mode séquentiel devient 4 Hz, alors qu'elle reste égale à 5 Hz pour le (les) autre(s) capteur(s).

Alternativement au quatrième perfectionnement de l'invention qui vient d'être décrit, les composantes de la variation de la ligne de visée LS qui possèdent des fréquences multiples de celle du balayage du mode séquentiel de saisie d'images, peuvent être déterminées en utilisant d'autres moyens que ceux du système d'imagerie. Par exemple, les amplitudes de ces composantes peuvent être déterminées à partir de mesures qui sont réalisées en utilisant des capteurs inertiels du satellite 100, tels que des gyroscopes, ou en utilisant des capteurs stellaires. Les résultats de telles mesures complémentaires peuvent être combinés avec ceux qui sont obtenus en utilisant le système d'imagerie conformément à l'invention.

Dans la séquence de procédé qui est représentée sur la figure 3a, le même contenu d'image qui est saisi lors du premier balayage Ref, est repris lors de chaque balayage ultérieur pour comparer les contenus d'image de mesure qui sont lus successivement avec les contenus d'image de référence issus du premier balayage, pour chaque fenêtre. La figure 3b correspond à la partie inférieure de la figure 3a pour une variante de mise en oeuvre de l'invention, et les mêmes notations sont reprises. Selon la variante de la figure 3b, lors de chaque nouvelle répétition du balayage du mode séquentiel, le contenu d'image de chaque fenêtre est comparé à celui obtenu pour la même fenêtre lors de la répétition précédente du balayage. Autrement dit, chaque contenu d'image qui est lu lors d'une exécution du balayage du mode séquentiel de saisie d'image pour l'une des fenêtres, sert de contenu d'image de référence pour la même fenêtre lors de la caractérisation de la ligne de visée qui résulte de l'exécution suivante du balayage.

La figure 2b correspond à la figure 2a pour une autre variante de mise en oeuvre de l'invention. Selon cette autre variante, le capteur d'image 20 est équipé de plusieurs, par exemple deux circuits de contrôle et de lecture des photodétecteurs, qui sont dédiés chacun à une partie complémentaire du capteur 20. Ainsi, les photodétecteurs d'une première moitié 20a de la surface utile du capteur 20 sont commandés et lus par un premier circuit (non représenté), et ceux d'une seconde moitié 20b de la surface utile sont commandés et lus par un second circuit (aussi non représenté), séparé du premier. L'utilisation en parallèle de plusieurs circuits de contrôle et de lecture en combinaison avec une même matrice de photodétecteurs est bien connue de l'Homme du métier. Des fonctionnements de saisie d'image en mode séquentiel peuvent alors être réalisés en parallèle et simultanément dans chaque moitié de capteur 20a, 20b, si bien que la durée totale de saisie d'une image en pleine trame est divisée par deux. Le procédé de l'invention peut alors être mis en oeuvre à l'intérieur de chaque moitié de capteur 20a, 20b, en utilisant au moins une fenêtre à l'intérieur de chacune d'elles. Ainsi, les fenêtres 22a-22c sont situées dans la moitié 20a du capteur d'image 20, et les fenêtres 22d-22f sont situées dans la moitié 22b du même capteur. Cette variante de l'invention permet de doubler la fréquence maximale des variations de la ligne de visée LS qui peuvent être mesurées.

Selon encore une autre variante de mise en oeuvre de l'invention, dont le but est aussi d'augmenter la fréquence maximale des variations de la ligne de visée qui peuvent être mesurées, le capteur d'image 20 peut être remplacé par plusieurs capteurs indépendants qui sont placés dans le plan focal du télescope 10. On entend par plusieurs capteurs indépendants des capteurs matriciels du type de celui de la figure 2a, et qui ont des matrices respectives et séparées de photodétecteurs. Les résultats des caractérisations de la variation de la ligne de visée qui sont obtenus à partir des images saisies par les différents capteurs sont regroupés dans une série unique ordonnée chronologiquement, qui peut être traitée comme décrit plus haut.

Pour les deux variantes à plusieurs circuits de contrôle et de lecture qui sont associés au même capteur, et de plusieurs capteurs indépendants qui sont agencés dans le plan focal, les fenêtres sont sélectionnées de préférence à l'intérieur de chaque partie de capteur ou de chaque capteur pour être toutes lues à des instants qui sont différents. De cette façon, une précision supérieure peut être obtenue pour caractériser les variations de la ligne de visée, à partir de l'ensemble des fenêtres ainsi sélectionnées. De plus, ces deux variantes peuvent être combinées avec l'un quelconque des quatre perfectionnements qui ont été décrits, ou plusieurs d'entre eux. En particulier, la variante de mise en oeuvre qui est illustrée par la figure 3b peut présenter une erreur systématique qui affecte les caractérisations successives de la variation de la ligne de visée, analogue à celle du mode de mise en oeuvre de la figure 3a. Elle peut alors être supprimée de la même façon en utilisant le troisième perfectionnement décrit.

## Revendications

1. Procédé de stabilisation d'une ligne de visée (LS) d'un système d'imagerie embarqué à bord d'un satellite (100), ledit système d'imagerie comprenant :
- un télescope (10) agencé pour former une image d'une scène dans un plan focal, suivant la ligne de visée du système d'imagerie ; et
- au moins un capteur d'image (20) matriciel disposé dans le plan focal, et adapté pour saisir des images successives selon un mode séquentiel, dans lequel des photodétecteurs (21) du capteur sont commandés successivement et individuellement pour une phase d'accumulation de signal de détection d'un rayonnement reçu suivie par une phase de lecture d'un signal accumulé, selon un ordre de balayage des photodétecteurs qui est répété continûment en boucle, chaque répétition du balayage des photodétecteurs correspondant à une nouvelle image saisie, et la phase de lecture pour l'un quelconque des photodétecteurs étant effectuée en même temps que la phase d'accumulation pour d'autres des photodétecteurs ;
suivant lequel, pour plusieurs fenêtres (22a-22d) formées chacune d'un sous-ensemble différent de photodétecteurs adjacents à l'intérieur du capteur, et chaque fenêtre étant plus petite qu'une surface utile totale du capteur, une portion d'image (Ma-Md) qui est saisie dans l'une des fenêtres lors d'une des répétitions du balayage des photodétecteurs est comparée avec un contenu d'image de référence (Ra-Rd) pour la même fenêtre de façon à caractériser une variation de la ligne de visée entre ladite répétition du balayage des photodétecteurs et un balayage de référence, et une nouvelle caractérisation de la variation de la ligne de visée étant obtenue séparément pour chaque fenêtre à chaque répétition du balayage des photodétecteurs ;
et suivant lequel une orientation d'une partie au moins du système d'imagerie est changée de façon à modifier la ligne de visée pour compenser au moins partiellement la variation de ladite ligne de visée.

2. Procédé selon la revendication 1, suivant lequel le même contenu d'image de référence (Ra-Rd) est repris pour plusieurs caractérisations successives de la variation de la ligne de visée (LS) obtenues à partir d'une même des fenêtres, de sorte qu'une même direction de référence soit utilisée pour les dites caractérisations de la variation de la ligne de visée.

3. Procédé selon la revendication 1, suivant lequel pour chaque nouvelle caractérisation de la variation de la ligne de visée (LS), le contenu d'image de référence utilisé pour chaque fenêtre (22a-22d) est la portion d'image qui a été saisie dans la même fenêtre lors de la répétition du balayage des photodétecteurs (21) correspondant à la caractérisation de la variation de la ligne de visée juste antérieure à ladite nouvelle caractérisation, de sorte qu'une direction de la ligne de visée résultant de la caractérisation antérieure constitue une direction de référence pour la nouvelle caractérisation.

4. Procédé selon l'une quelconque des revendications précédentes, suivant lequel les fenêtres (22a-22d) pour lesquelles les portions d'images sont comparées entre deux répétitions du balayage des photodétecteurs (21), sont disjointes à l'intérieur du capteur (20).

5. Procédé selon l'une quelconque des revendications précédentes, suivant lequel les fenêtres (22a-22d) pour lesquelles les portions d'images sont comparées entre deux répétitions du balayage des photodétecteurs (21), correspondent à des positions différentes d'un même gabarit à l'intérieur du capteur (20), et les fenêtres sont déterminées par des translations successives du gabarit à l'intérieur du capteur au fur et à mesure du balayage des photodétecteurs pour chaque image saisie.

6. Procédé selon l'une quelconque des revendications précédentes, suivant lequel le capteur d'image (20) comprend au moins deux circuits séparés de contrôle et de lecture dédiés respectivement à des parties du capteur (20a, 20b) complémentaires et formées chacune d'un sous-ensemble de photodétecteurs (21) adjacents, de sorte que des parties d'image sont saisies respectivement par les parties du capteur selon le mode séquentiel mis en oeuvre séparément et simultanément à l'intérieur des dites parties du capteur,
au moins une des fenêtres (20a-20f) étant définie à l'intérieur de chaque partie du capteur,
et suivant lequel les portions d'images saisies dans chaque fenêtre à l'intérieur de chaque partie du capteur, sont comparées entre deux répétitions différentes du balayage des photodétecteurs de ladite partie du capteur.

7. Procédé selon l'une quelconque des revendications précédentes, suivant lequel plusieurs capteurs d'images séparés sont disposés dans le plan focal, de façon à saisir simultanément des images respectives selon le mode séquentiel mis en oeuvre séparément pour chaque capteur,
et suivant lequel des portions d'images saisies dans des fenêtres à l'intérieur de chaque capteur, sont comparées entre deux répétitions différentes du balayage des photodétecteurs dudit capteur, simultanément pour les dits plusieurs capteurs.

8. Procédé selon l'une quelconque des revendications précédentes, suivant lequel un résultat de chaque caractérisation de la variation de la ligne de visée (LS) est pondéré, sélectionné ou rejeté en fonction d'un contenu ou d'un niveau de qualité de la portion d'image qui est saisie et comparée avec le contenu d'image de référence pour ladite caractérisation.

9. Procédé selon l'une quelconque des revendications précédentes, suivant lequel plusieurs résultats de caractérisations de la variation de la ligne de visée (LS) qui ont été obtenus successivement pour des fenêtres (22a-22d) différentes ou pour des répétitions différentes du balayage des photodétecteurs (21), sont ensuite filtrés par rapport à une vitesse de variation des dits résultats.

10. Procédé selon l'une quelconque des revendications précédentes, suivant lequel une variation moyenne de la ligne de visée (LS) est calculée à partir de plusieurs résultats de caractérisations de la variation de la ligne de visée qui ont été obtenus pour des fenêtres (22a-22d) différentes ou pour des répétitions différentes du balayage des photodétecteurs (21).

11. Procédé selon l'une quelconque des revendications précédentes, comprenant en outre les étapes suivantes :
- calculer une décomposition en série de Fourier pour des résultats de caractérisations successives de la variation de la ligne de visée (LS), sous forme d'une somme de composantes à variations périodiques respectivement associées à des valeurs d'une fréquence de variation de la ligne de visée ;
- appliquer une correction à certaines amplitudes des composantes à variations périodiques, de façon à réduire des variations des dites amplitudes dans des intervalles limités autour de multiples de la fréquence du balayage des photodétecteurs (21) ; puis
- calculer une recomposition de série Fourier à partir des composantes à variations périodiques, en utilisant les amplitudes corrigées à l'intérieur des intervalles limités autour des multiples de la fréquence du balayage des photodétecteurs, ladite recomposition de série de Fourier fournissant des résultats corrigés pour les caractérisations successives de la variation de la ligne de visée.

12. Procédé selon l'une quelconque des revendications précédentes, suivant lequel le balayage répété des photodétecteurs (21) pour saisir les images successives est effectué d'abord à une première fréquence pendant une première durée, puis à une seconde fréquence différente de la première fréquence pendant une seconde durée, les première et seconde fréquences étant sélectionnées de sorte que des repliements de spectre qui affectent les résultats obtenus pendant chaque durée pour la variation de la ligne de visée (LS), soient différents.

13. Procédé selon la revendication 12, suivant lequel le balayage des photodétecteurs (21) pendant l'une des première et seconde durées est plus lent que pendant l'autre des dites durées, en utilisant un même nombre de photodétecteurs pour le mode séquentiel qui est mis en oeuvre pendant chacune des dites durées.

14. Procédé selon la revendication 12, suivant lequel le balayage qui est effectué à la fréquence la plus élevée est restreint à un premier nombre des photodétecteurs (21) du capteur d'image (20), plus petit qu'un second nombre des photodétecteurs dudit capteur d'image utilisés pour le balayage qui est effectué à la fréquence la plus faible.

15. Procédé selon l'une quelconque des revendications précédentes, suivant lequel plusieurs capteurs d'images matriciels sont disposés dans le plan focal pour saisir simultanément des images respectives selon le mode séquentiel mis en oeuvre séparément pour chaque capteur d'image,
et suivant lequel le balayage des photodétecteurs pour le mode séquentiel est répété à une première fréquence pour un premier des dits capteurs d'images et à une seconde fréquence pour un second des dits capteurs d'images, les première et seconde fréquences étant différentes et sélectionnées de sorte que des multiples de la première fréquence ne coïncident pas avec des multiples de la seconde fréquence.

16. Procédé selon l'une quelconque des revendications 1 à 15, suivant lequel l'orientation de la partie du système d'imagerie (10) est changée en variant une orientation d'un support mobile dudit système d'imagerie par rapport à une structure principale du satellite (100), ou en variant une orientation d'un dispositif de pointage variable agencé pour ajuster la ligne de visée (LS) par rapport au capteur d'image (20).

17. Procédé selon l'une quelconque des revendications 1 à 15, suivant lequel l'orientation du système d'imagerie (10) est changée en variant une attitude du satellite (100) et en gardant fixe la ligne de visée (LS) par rapport au satellite.

18. Système d'imagerie destiné à être embarqué à bord d'un satellite (100), et adapté pour stabiliser une ligne de visée (LS) dudit système d'imagerie, comprenant :
- un télescope (10) agencé pour former une image d'une scène dans un plan focal, suivant la ligne de visée du système d'imagerie ;
- au moins un capteur d'image (20) matriciel disposé dans le plan focal, et adapté pour saisir des images successives selon un mode séquentiel, dans lequel des photodétecteurs (21) du capteur sont commandés successivement et individuellement pour une phase d'accumulation de signal de détection d'un rayonnement reçu suivie par une phase de lecture d'un signal accumulé, selon un ordre de balayage des photodétecteurs qui est répété continûment en boucle, chaque répétition du balayage des photodétecteurs correspondant à une nouvelle image saisie, et la phase de lecture pour l'un quelconque des photodétecteurs étant effectuée en même temps que la phase d'accumulation pour d'autres des photodétecteurs ; et
- une unité de comparaison d'images (102), adaptée pour sélectionner plusieurs fenêtres (22a-22d) formées chacune d'un sous-ensemble différent de photodétecteurs adjacents à l'intérieur du capteur, chaque fenêtre étant plus petite qu'une surface utile totale du capteur, et adaptée pour comparer une portion d'image (Ma-Md) qui est saisie dans l'une des fenêtres lors d'une des répétitions du balayage des photodétecteurs avec un contenu d'image de référence (Ra-Rd) pour la même fenêtre, de façon à caractériser une variation de la ligne de visée entre ladite répétition du balayage des photodétecteurs et un balayage de référence, et adaptée pour obtenir une nouvelle caractérisation de la variation de la ligne de visée séparément pour chaque fenêtre à chaque répétition du balayage des photodétecteurs ; et
- une unité de commande (103) adaptée pour contrôler un changement d'une orientation d'une partie au moins du système d'imagerie, de façon à modifier la ligne de visée pour compenser au moins partiellement la variation de ladite ligne de visée.

19. Système selon la revendication 18, adapté pour mettre en oeuvre un procédé selon l'une quelconque des revendications 1 à 15.

20. Système selon la revendication 18 ou 19, comprenant en outre un support mobile du système d'imagerie agencé pour varier une orientation dudit système d'imagerie, et l'unité de commande est agencée pour contrôler un changement d'une orientation du support mobile, de façon à modifier la ligne de visée (LS) pour compenser au moins partiellement la variation de ladite ligne de visée.

21. Système selon la revendication 18 ou 19, comprenant en outre un dispositif de pointage variable agencé pour modifier la ligne de visée (LS) par rapport au capteur d'image (20), et l'unité de commande est agencée pour contrôler un déplacement du dispositif de pointage variable de façon à compenser au moins partiellement la variation de ladite ligne de visée.

22. Système selon la revendication 18 ou 19, dans lequel l'unité de commande (103) est adaptée pour contrôler un fonctionnement d'un système de contrôle d'attitude et d'orbite (101) du satellite (100), de façon à varier l'attitude du satellite pour compenser au moins partiellement la variation de la ligne de visée (LS).

## Patentansprüche

1. Verfahren zur Stabilisierung einer Sichtlinie (LS) eines an Bord eines Satelliten (100) mitgeführten Abbildungssystems, wobei das Abbildungssystem Folgendes umfasst:
- ein Teleskop (10), das eingerichtet ist, ein Bild einer Szene in einer Fokalebene entlang der Sichtlinie des Abbildungssystems auszubilden; und
-- zumindest einen Matrixbildsensor (20), der in der Fokalebene angeordnet und angepasst ist, aufeinanderfolgende Bilder in einem sequenziellen Modus zu erfassen, in dem Photodetektoren (21) des Sensors aufeinanderfolgend und einzeln gesteuert werden für eine Erkennungssignal-Akkumulationsphase einer empfangenen Strahlung, gefolgt von einer Lesephase eines akkumulierten Signals, in einer Photodetektoren-Abtastreihenfolge, die kontinuierlich in einer Schleife wiederholt wird, wobei jede Abtastwiederholung der Photodetektoren einem neu erfassten Bild entspricht und wobei die Lesephase für einen jeden der Photodetektoren gleichzeitig mit der Akkumulationsphase für andere Photodetektoren ausgeführt wird;
wobei für mehrere ausgebildete Fenster (22a-22d) jedes einer unterschiedlichen Unterbaugruppe von innerhalb des Sensors benachbarten Photodetektoren und jedes Fenster, das kleiner als eine Gesamtnutzfläche des Sensors ist, ein Bildabschnitt (Ma-Md), der bei einer der Abtastwiederholungen der Photodetektoren in einem der Fenster erfasst wird, mit einem Referenzbildinhalt (Ra-Rd) für dasselbe Fenster verglichen wird, um eine Variation der Sichtlinie zwischen der Abtastwiederholung des Photodetektoren und einer Referenzabtastung zu charakterisieren, und wobei bei jeder Abtastwiederholung der Photodetektoren eine neue Charakterisierung der Sichtlinienvariation getrennt für jedes Fenster erhalten wird;
und wobei eine Ausrichtung zumindest eines Bereichs des Abbildungssystems geändert wird, um die Sichtlinie zu verändern, um die Variation der Sichtlinie zumindest teilweise zu kompensieren.

2. Verfahren nach Anspruch 1, wobei derselbe Referenzbildinhalt (Ra-Rd) für mehrere aufeinanderfolgende Charakterisierungen der Variation der Sichtlinie (LS), die aus einem selben der Fenster erhalten werden, übernommen wird, sodass ein und dieselbe Referenzrichtung für die Charakterisierungen der Sichtlinienvariation genutzt wird.

3. Verfahren nach Anspruch 1, wobei für jede neue Charakterisierung der Variation der Sichtlinie (LS) der für jedes Fenster (22a-22d) genutzte Referenzbildinhalt der Bildabschnitt ist, der in demselben Fenster bei der Abtastwiederholung der Photodetektoren (21), die der direkt der neuen Charakterisierung vorangehenden Charakterisierung der Sichtlinienvariation entspricht, erfasst wurde, sodass eine aus der vorangehenden Charakterisierung resultierende Richtung der Sichtlinie eine Referenzrichtung für die Charakterisierung darstellt.

4. Verfahren nach einem der vorangehenden Ansprüche, wobei die Fenster (22a-22d), für welche die Bildabschnitte zwischen zwei Abtastwiederholungen der Photodetektoren (21) verglichen werden, innerhalb des Sensors (20) getrennt sind.

5. Verfahren nach einem der vorangehenden Ansprüche, wobei die Fenster (22a-22d), für welche die Bildabschnitte zwischen zwei Abtastwiederholungen der Photodetektoren (21) verglichen werden, unterschiedlichen Positionen ein und derselben Kontur innerhalb des Sensors (20) entsprechen und die Fenster durch aufeinanderfolgende Verschiebungen der Kontur innerhalb des Sensors im Zuge des Abtastens der Photodetektoren für jedes erfasste Bild bestimmt werden.

6. Verfahren nach einem der vorangehenden Ansprüche, wobei der Bildsensor (20) zumindest zwei getrennte Steuerungs- und Leseschaltungen umfasst, die jeweils für komplementäre Bereiche des Sensors (20a, 20b), die jeder aus einer Unterbaugruppe benachbarter Photodetektoren (21) ausgebildet sind, bestimmt sind, sodass Bildbereiche jeweils durch die Bereiche des Sensors im sequenziellen Modus, der getrennt und gleichzeitig innerhalb der Bereiche des Sensors durchgeführt wird, erfasst werden,
wobei zumindest eines der Fenster (20a-20f) innerhalb jedes Sensorbereichs definiert ist,
und wobei die in jedem Fenster innerhalb jedes Sensorbereichs erfassten Bildabschnitte zwischen zwei unterschiedlichen Abtastwiederholungen der Photodetektoren des Sensorbereichs verglichen werden.

7. Verfahren nach einem der vorangehenden Ansprüche, wobei mehrere getrennte Bildsensoren in der Fokalebene angeordnet sind, um jeweilige Bilder im sequenziellen Modus, der für jeden Sensor einzeln durchgeführt wird, gleichzeitig zu erfassen,
und wobei in Fenstern innerhalb jedes Sensors erfasste Bildabschnitte zwischen zwei unterschiedlichen Abtastwiederholungen der Photodetektoren des Sensors gleichzeitig für die mehreren Sensoren verglichen werden.

8. Verfahren nach einem der vorangehenden Ansprüche, wobei ein Ergebnis jeder Charakterisierung der Variation der Sichtlinie (LS) in Abhängigkeit von einem Inhalt oder einem Qualitätsniveau des Bildabschnitts, der für die Charakterisierung erfasst und mit dem Referenzbildinhalt verglichen wird, gewichtet, ausgewählt oder abgelehnt wird.

9. Verfahren nach einem der vorangehenden Ansprüche, wobei mehrere Ergebnisse von Charakterisierungen der Variation der Sichtlinie (LS), die aufeinanderfolgend für unterschiedliche Fenster (22a-22d) oder für unterschiedliche Abtastwiederholungen der Photodetektoren (21) erhalten wurden, anschließend in Bezug auf eine Variationsgeschwindigkeit der Ergebnisse gefiltert werden.

10. Verfahren nach einem der vorangehenden Ansprüche, wobei eine mittlere Variation der Sichtlinie (LS) anhand von mehreren Ergebnissen von Charakterisierungen der Sichtlinienvariation, die für unterschiedliche Fenster (22a-22d) oder für unterschiedliche Abtastwiederholungen der Photodetektoren (21) erhalten wurden, berechnet wird.

11. Verfahren nach einem der vorangehenden Ansprüche, umfassend ferner die folgenden Schritte:
- Berechnen einer Fourierreihenzerlegung für Ergebnisse aufeinanderfolgender Charakterisierungen der Sichtlinienvariation (LS) in Form einer Summe von Komponenten mit periodischen Variationen, die jeweils Werten einer Sichtlinienvariationsfrequenz zugeordnet werden;
- Anwenden einer Korrektur auf bestimmte Amplituden der Komponenten mit periodischen Variationen, um Variationen der Amplituden in begrenzten Intervallen um Vielfache der Abtastfrequenz der Photodetektoren (21) zu verringern; und anschließend
- Berechnen einer Fourierreihenneuzusammensetzung anhand der Komponenten mit periodischen Variationen unter Nutzung der korrigierten Amplituden innerhalb von begrenzten Intervallen um Vielfache der Abtastfrequenz der Photodetektoren, wobei die Fourierreihenneuzusammensetzung korrigierte Ergebnisse für die aufeinanderfolgenden Charakterisierungen der Sichtlinienvariation liefert.

12. Verfahren nach einem der vorangehenden Ansprüche, wobei das wiederholte Abtasten der Photodetektoren (21) zur Erfassung der aufeinanderfolgenden Bilder zunächst mit einer ersten Frequenz während einer ersten Dauer und anschließend mit einer von der ersten Frequenz abweichenden zweiten Frequenz während einer zweiten Dauer ausgeführt wird, wobei die erste und die zweite Frequenz so ausgewählt sind, dass Aliasing-Effekte, welche die während jeder Dauer für die Variation der Sichtlinie (LS) erhaltenen Ergebnisse beeinflussen, unterschiedlich sind.

13. Verfahren nach Anspruch 12, wobei das Abtasten der Photodetektoren (21) während einer der ersten und zweiten Dauern langsamer als während der anderen der Dauern ist, wobei eine selbe Anzahl an Photodetektoren für den sequenziellen Modus, der während jeder der Dauern durchgeführt wird, genutzt wird.

14. Verfahren nach Anspruch 12, wobei das Abtasten, das mit der höchsten Frequenz ausgeführt wird, auf eine erste Anzahl der Photodetektoren (21) des Bildsensors (20) beschränkt ist, die kleiner ist als eine zweite Anzahl der Photodetektoren des Bildsensors, die für das Abtasten, das mit der schwächsten Frequenz ausgeführt wird, genutzt werden.

15. Verfahren nach einem der vorangehenden Ansprüche, wobei mehrere Matrixbildsensoren in der Fokalebene angeordnet sind, um jeweilige Bilder im sequenziellen Modus, der für jeden Bildsensor einzeln durchgeführt wird, gleichzeitig zu erfassen,
und wobei das Abtasten der Photodetektoren für den sequenziellen Modus mit einer ersten Frequenz für einen ersten der Bildsensoren und mit einer zweiten Frequenz für einen zweiten der Bildsensoren wiederholt wird, wobei die erste und die zweite Frequenz unterschiedlich und so ausgewählt sind, dass Vielfache der ersten Frequenz nicht mit Vielfachen der zweiten Frequenz zusammenfallen.

16. Verfahren nach einem der Ansprüche 1 bis 15, wobei die Orientierung des Bereichs des Abbildungssystems (10) verändert wird, indem eine Orientierung eines beweglichen Trägers des Abbildungssystems in Bezug auf eine Hauptstruktur des Satelliten (100) variiert wird oder indem eine Orientierung einer variablen Ausrichtungsvorrichtung variiert wird, um die Sichtlinie (LS) in Bezug auf den Bildsensor (20) anzupassen.

17. Verfahren nach einem der Ansprüche 1 bis 15, wobei die Orientierung des Abbildungssystems (10) verändert wird, indem eine Lage des Satelliten (100) variiert und indem die Sichtlinie (LS) in Bezug auf den Satelliten beibehalten wird.

18. Abbildungssystem, das für die Mitführung an Bord eines Satelliten (100) vorgesehen und angepasst ist, eine Sichtlinie (LS) des Abbildungssystems zu stabilisieren, umfassend:
- ein Teleskop (10), das eingerichtet ist, ein Bild einer Szene in einer Fokalebene entlang der Sichtlinie des Abbildungssystems auszubilden;
- zumindest einen Matrixbildsensor (20), der in der Fokalebene angeordnet und angepasst ist, aufeinanderfolgende Bilder in einem sequenziellen Modus zu erfassen, in dem Photodetektoren (21) des Sensors aufeinanderfolgend und einzeln gesteuert werden für eine Erkennunssignal-Akkumulationsphase einer empfangenen Strahlung, gefolgt von einer Lesephase eines akkumulierten Signals, in einer Photodetektoren-Abtastreihenfolge, die kontinuierlich in einer Schleife wiederholt wird, wobei jede Abtastwiederholung der Photodetektoren einem neu erfassten Bild entspricht und wobei die Lesephase für einen jeden der Photodetektoren gleichzeitig mit der Akkumulationsphase für andere Photodetektoren ausgeführt wird; und
- eine Bildvergleichseinheit (102), die angepasst ist, mehrere Fenster (22a-22d) auszuwählen, die jeweils aus einer unterschiedlichen Unterbaugruppe benachbarter Photodetektoren innerhalb des Sensors ausgebildet sind, wobei jedes Fenster kleiner als eine Gesamtnutzfläche des Sensors ist und angepasst ist, einen Bildabschnitt (Ma-Md), der in einem der Fenster bei einer der Abtastwiederholungen der Photodetektoren erfasst wird, mit einem Referenzbildinhalt (Ra-Rd) für dasselbe Fenster zu vergleichen, um eine Variation der Sichtlinie zwischen der Abtastwiederholung der Photodetektoren und einer Referenzabtastung zu charakterisieren, und angepasst ist, bei jeder Abtastwiederholung der Photodetektoren eine neue Charakterisierung der Sichtlinienvariation getrennt für jedes Fenster zu erhalten; und
-- eine Steuerungseinheit (103), die angepasst ist, eine Änderung einer Orientierung zumindest eines Bereichs des Abbildungssystems zu steuern, um die Sichtlinie zu verändern, um die Variation der Sichtlinie zumindest teilweise zu kompensieren.

19. System nach Anspruch 18, das angepasst ist, ein Verfahren nach einem der Ansprüche 1 bis 15 durchzuführen.

20. System nach Anspruch 18 oder 19, umfassend ferner einen beweglichen Träger des Abbildungssystems, der eingerichtet ist, eine Orientierung des Abbildungssystems zu variieren, und wobei die Steuerungseinheit eingerichtet ist, eine Veränderung einer Orientierung des beweglichen Trägers zu steuern, um die Sichtlinie (LS) zu verändern, um die Variation der Sichtlinie zumindest teilweise zu kompensieren.

21. System nach Anspruch 18 oder 19, umfassend ferner eine variable Ausrichtungsvorrichtung, die eingerichtet ist, die Sichtlinie (LS) in Bezug auf den Bildsensor (20) zu variieren, und wobei die Steuerungseinheit eingerichtet ist, eine Bewegung der variablen Ausrichtungsvorrichtung zu steuern, um die Variation der Sichtlinie zumindest teilweise zu kompensieren.

22. System nach Anspruch 18 oder 19, wobei die Steuerungseinheit (103) angepasst ist, einen Betrieb eines Systems (101) zur Steuerung der Lage und der Umlaufbahn des Satelliten (100) zu steuern, um die Lage des Satelliten zu variieren, um die Sichtlinienvariation (LS) zumindest teilweise zu kompensieren.

## Claims

1. Method for stabilizing a line of sight (LS) of an imaging system on-board a satellite (100), said imaging system comprising:
- a telescope (10) arranged to form an image of a scene in a focal plane, according to the line of sight of the imaging system; and
- at least one matrix image sensor (20) arranged in the focal plane and suitable for capturing successive images in a sequential mode, in which photodetectors (21) of the sensor are successively and individually controlled during an accumulation phase of a detection signal for received radiation, followed by a read phase of an accumulated signal, based on an order for scanning the photodetectors that is repeated continuously in a loop, each repetition of scan of the photodetectors corresponding to a newly captured image, and the read phase for any of the photodetectors being carried out at the same time as the accumulation phase for other ones of the photodetectors;
wherein, for several windows (22a-22d), each of which consists of a different subset of adjacent photodetectors within the sensor, each window being smaller than a total use surface of the sensor, an image portion (Ma-Md) captured in one of the windows during one of the repetitions of the scan of the photodetectors is compared with a reference image (Ra-Rd) content for the same window, so as to characterize a variation of the line of sight between said repetition of the scan of photodetectors and a reference scan, and a new characterization of the variation of the line of sight being obtained separately for each window at each repetition of the scan of the photodetectors;
and wherein an orientation of at least part of the imaging system is changed so as to modify the line of sight to compensate, at least partially, for the variation of said line of sight.

2. Method according to claim 1, wherein the same reference image (Ra-Rd) content is reused for several successive characterizations of the variation of the line of sight (LS) obtained from one of said windows, so that one and same reference direction is used for said characterizations of the variation of the line of sight.

3. Method according to claim 1, wherein for each new characterization of the variation of the line of sight (LS), the reference image content used for each window (22a-22d) is the image portion that was acquired in the same window during the repeated scan of the photodetectors (21) corresponding to the characterization of the line of sight immediately prior to said new characterization, so that a direction of the line of sight resulting from the prior characterization constitutes a reference direction for the new characterization.

4. Method according to any of the preceding claims, wherein the windows (22a-22d) for which the image portions are compared between two repetitions of the scan of the photodetectors (21) are separated within the sensor (20).

5. Method according to any of the preceding claims, wherein the windows (22a-22d) for which the image portions are compared between two repetitions of the scan of the photodetectors (21) correspond to different positions of a same template within the sensor (20), and wherein the windows are determined by successive translations of the template within the sensor as the scan of the photodetectors proceeds for each captured image.

6. Method according to any of the preceding claims, wherein the image sensor (20) comprises at least two separate control and read circuits dedicated, respectively, to complementary parts of the sensor (20a, 20b), each of which is formed of a subset of adjacent photodetectors (21), in such a way that parts of the image are acquired, respectively, by the parts of the sensor according to the sequential mode that is implemented separately and simultaneously within said parts of the sensor,
at least one of the windows (20a-20f) being defined inside each part of the sensor,
and wherein the portions of images that are captured in each window within each part of the sensor are compared between two different repetitions of scan of the photodetectors of said part of the sensor.

7. Method according to any of the preceding claims, wherein several separate image sensors are arranged in the focal plane so as to simultaneously acquire respective images according to the sequential mode implemented separately for each sensor,
and wherein portions of images captured in windows inside each sensor are compared between two different repetitions of the scan of the photodetectors of said sensor, simultaneously for said several sensors.

8. Method according to any of the preceding claims, wherein a result of each characterization of the variation of the line of sight (LS) is weighted, selected, or rejected based on a content or quality of the image portion that is captured and compared with the content of the reference image for said characterization.

9. Method according to any of the preceding claims, wherein several results of characterizations of line-of-sight (LS) variations that were successively obtained for different windows (22a-22d) or for different repetitions of the scan of the photodetectors (21) are then filtered with respect to a rate of variation of said results.

10. Method according to any of the preceding claims, wherein an average variation of the line-of-sight (LS) is calculated from several results of characterizations of variations of the line of sight obtained for different windows (22a-22d) or for different repetitions of the scan of the photodetectors (21).

11. Method according to any of the preceding claims, also comprising the following steps:
- calculating a Fourier series decomposition for results of successive characterizations of the variation in the line of sight (LS), in form of a sum of components with periodic variations associated respectively with values of a variation rate of the line of sight;
- applying a correction to certain amplitudes of the components with periodic variations, to reduce variations of said amplitudes within limited intervals around multiples of the photodetector (21) scan frequency; then
- calculating a Fourier series recomposition from the components with periodic variations using the amplitudes that were corrected within the limited intervals around the multiples of the photodetector scan frequency, said Fourier series recomposition supplying corrected results for the successive characterizations of the variation of the line of sight.

12. Method according to any of the preceding claims, wherein the repeated scan of the photodetectors (21) to capture the successive images is performed initially at a first frequency for a first period of time, then at a second frequency different from the first frequency for a second period of time, the first and second frequencies being selected so that aliasing distortions that affect the results obtained during each period for the variation of the line of sight (LS) are different.

13. Method according to claim 12, wherein the photodetector (21) scan during one of the first and second time periods is slower than during the other one of said periods, while using the same number of photodetectors for the sequential mode that is implemented during each of said periods.

14. Method according to claim 12, wherein the scan carried out at the highest frequency is limited to a first number of photodetectors (21) of the image sensor (20), smaller than a second number of photodetectors of said image sensor used for the scanning carried out at the lowest frequency.

15. Method according to any of the preceding claims, wherein several matrix image sensors are arranged in the focal plane to simultaneously capture respective images according to the sequential mode implemented separately for each image sensor,
and wherein the scan of the photodetectors in the sequential mode is repeated at a first frequency for a first one of said image sensors and at a second frequency for a second one of said image sensors, the first and second frequencies being different and selected so that multiples of the first frequency do not coincide with multiples of the second frequency.

16. Method according to any of claims 1 to 15, wherein the orientation of the part of the imaging system (10) is changed by varying an orientation of a mobile support of said imaging system with respect to a principal structure of the satellite (100), or by varying an orientation of a variable pointing device arranged to adjust the line of sight (LS) with respect to the image sensor (20).

17. Method according to any of claims 1 to 15, wherein the orientation of the imaging system (10) is changed by varying an attitude of the satellite (100) and by keeping the line of sight (LS) fixed with respect to the satellite.

18. Imaging system intended to be placed on board a satellite (100) and suitable for stabilizing a line of sight (LS) of said imaging system, comprising:
- a telescope (10) arranged to form an image of a scene in a focal plane, according to the line of sight of the imaging system;
- at least one matrix image sensor (20) arranged in the focal plane and suitable for capturing successive images in a sequential mode, in which photodetectors (21) of the sensor are successively and individually controlled during an accumulation phase of a detection signal for received radiation, followed by a read phase of an accumulated signal, based on an order for scanning the photodetectors that is repeated continuously in a loop, each repetition of scan of the photodetectors corresponding to a newly captured image, and the read phase for any of the photodetectors being carried out at the same time as the accumulation phase for other ones of the photodetectors; and
- an image comparison unit (102), which is suitable for selecting several windows (22a-22d), each of which consists of a different subset of adjacent photodetectors within the sensor, each window being smaller than a total use surface of the sensor, and suitable for comparing a portion of the image (Ma-Md) captured in one of the windows during one of the repetitions of the scan of the photodetectors with a reference image (Ra-Rd) content for the same window, so as to characterize a variation of the line of sight between said repetition of the scan of the photodetectors and a reference scan, and suitable for obtaining a new characterization of the variation of the line of sight separately for each window at each repetition of the scan of the photodetectors; and
- a control unit (103) suitable for controlling a change in an orientation of at least part of the imaging system so as to modify the line of sight to compensate, at least partially, for the variation of said line of sight.

19. System according to claim 18, suitable for implementing a method according to any one of claims 1 to 15.

20. System according to claim 18 or 19, also comprising a mobile support of the imaging system arranged to vary an orientation of said imaging system, and wherein the control unit is arranged to control a change of orientation of the mobile support so as to modify the line of sight (LS) to compensate, at least partially, for the variation of said line of sight.

21. System according to claim 18 or 19, also comprising a variable pointing device arranged to modify the line of sight (LS) with respect to the image sensor (20), and wherein the control unit is arranged to control a displacement of the variable pointing device in order to compensate, at least partially, for the variation of said line of sight.

22. System according to claim 18 or 19, in which the control unit (103) is suitable for controlling an operation of an attitude and orbit control system (101) of the satellite (100), so as to vary the satellite's attitude in order to compensate, at least partially, for the variation of the line of sight (LS).
